# EUROPEAN PATENT APPLICATION

(11) **EP 2 008 976 A1**
(43) Date of publication of application: **31.12.2008**
(21) Application number: 07012419.3
(22) Date of filing: 25.06.2007
(51) Int. Cl.: C02F 5/10, C11D 3/20, C02F 103/28

(54) **Biodegradable cleaning agent**

(71) Applicant: Ashland Licensing and Intellectual Property LLC, Dublin, OH 43017 (US)
(72) Inventor: Bellmann, Susanne, 40878 Ratingen (DE); Schulte, Johann, 47803 Krefeld (DE); De Cordt, Frank, 2520 Emblem (BE)
(74) Representative: Bülle, Jan

(57) **Abstract**

The invention relates to the use of a composition comprising (i) ascorbic acid, (ii) a monocarboxylic acid and (iii) a multicarboxylic acid for removing and/or preventing deposits from surfaces of water-bearing systems, preferably of machines or parts of machines, preferably for processing cellulosic material.

## Description

### FIELD OF THE INVENTION

The invention relates to a biodegradable cleaning agent and its use, particularly for removing and/or preventing deposits from surfaces of water-bearing systems, e.g., in papermaking industry.

### BACKGROUND OF RELATED TECHNOLOGY

Deposits of inorganic or organic composition form a fundamental problem as regards the operation of industrial plants in which fluids, particularly aqueous media move through pipe systems or are stored (intermediately) in containers. Thus, for example, inorganic deposit of scales can interfere with the operation of refrigerating plants or, in the worst case, cause a total shutdown thereof.

Furthermore, organic deposits often occur in the form of a biofilm. These are formed primarily in aqueous systems at the interface with a solid phase and consist of a slimy layer in which micro-organisms (e.g. bacteria, algae, fungi, and protozoa) are embedded. Biofilms are formed when micro-organisms settle at the interface. As a rule, the biofilm contains, other than the micro-organisms, primarily water and extracellular polymeric substances exuded by the micro-organisms which, in conjunction with the water, form hydro-gels and contain other nutrients or substances. Often, particles are included in the resulting slimy matrix that are found in the aqueous medium adjacent the interface. If the conditions for growth are optimal, particularly the temperature and favorable nutrients, then the deposits can grow to a substantial layer thickness. For example, in industrial plants, this can lead to operational errors owing to reduced pipe cross-sections or choking of filters. Moreover, fragments can be released from the biofilm that can affect the operation of the plant. Finally, the material released by the biofilm organisms can additionally accelerate the corrosion of their substrates.

What is particularly problematic is the formation of biofilms and other deposits in papermaking plants, particularly in the components that are used for the accommodation and transfer of an aqueous fiber suspension. The biofilm (also called "fouling") which forms in such a papermaking plant is also characterized by the fact that it contains a high proportion of fibers, fine substances, and inorganic pigments that are bound by the organic matrix. Such biofilms typically are accompanied by protective exopolysaccharides ("slime", EPS) and occur at the interface of these equipment surfaces and process water streams. Additionally, inorganic contaminants, such as calcium carbonate ("scale") and organic contaminants often deposit on such surfaces. These organic contaminants are typically known as "pitch" (e.g., resins from wood) and "stickies" (e.g., glues, adhesives, tape, and wax particles).

If the layer thickness of the deposit is too great, it might break away from the substrate. The portions thus released might cause faulty operation, particularly tearing of the paper webs during paper manufacture, which leads to high consequential costs. In order to avoid this, deposit control agents are added, which, however, pose a health hazard and also suffer from comparatively poor biodegradability.

There is a demand for cleaning compositions that are useful for removing and/or preventing deposits from surfaces of water-bearing systems which exhibit a good cleaning efficacy along with a high biodegradability.

### SUMMARY OF THE INVENTION

It has been surprisingly found that aqueous compositions comprising a combination of (i) ascorbic acid, (ii) a monocarboxylic acid and (iii) a multicarboxylic acid may be advantageously used to treat surfaces of water bearing systems, in particular to clean pulp, paper, paper board, or cardboard-making machines or their parts from deposits, such as adhering synthetic polymers, natural resins, biofilms, oils and grease, or to prevent adhesion of these deposits on the surfaces of these machines or machine parts.

### BRIEF DESCRIPTION OF THE DRAWINGS

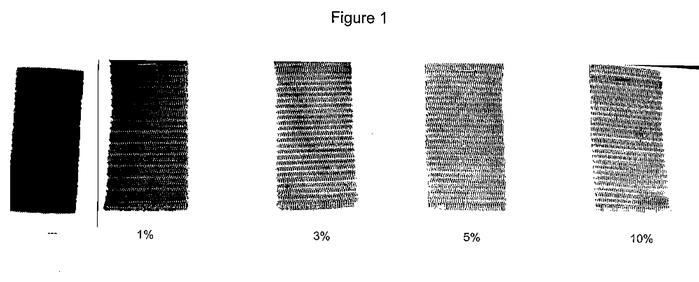

Fig. 1 shows drying screens that had been used in a paper plant and were treated with the composition according to the invention (percentages indicate the concentrations of the composition that was used).

### DETAILED DESCRIPTION OF THE INVENTION

Compositions comprising a combination of monocarboxylic acids and multicarboxylic acids are known from the prior art. However, it has been surprisingly found that these compositions show a synergistic effect with ascorbic acid and have the property of cleaning machines and plant elements from special impurities and of preventing adherence of these special contaminants on the surfaces of machines units or parts of plants. The combinations exhibit an excellent biodegradability and extremely low toxicity.

A first aspect of the invention relates to the use of a composition comprising (i) ascorbic acid, (ii) a monocarboxylic acid and (iii) a multicarboxylic acid for removing and/or preventing deposits from surfaces of water-bearing systems, preferably of machines or parts of machines, preferably for processing cellulosic material.

Independently of one another, the ascorbic acid, the monocarboxylic acid and the multicarboxylic acid may be present either as the free acid (ascorbic acid as the free alcohol) or as a salt, such as a salt of an alkali metal or of an alkaline earth metal,

For the purpose of the specification, the term "surface of a water-bearing system" preferably refers to the surface of any item, article, unit, system, component and the like, e.g., any device, apparatus, equipment, gadget, machine, engine, or part thereof that comes into contact with water or an aqueous medium during operation. The surface of said item, article, unit, system, component may be organic or inorganic. In a preferred embodiment, the surface comprises an inorganic material, such as metal, metal oxide, a silicious material (e.g. concrete), glass or enamel. In another preferred embodiment, the surface comprises an organic material, such as a polymer, e.g. a duroplast, thermoplast or elastomer.

The skilled person is fully aware of the meaning of the term "deposit". For the purpose of the specification, the term "deposit" preferably refers to any material that has deposited, i.e. formed, e.g. preciptated, settled, sedimented, adhered, etc., on the surface of the water-bearing system. The deposit may be dense or spongy, hard or soft, smooth or rough, and the like. The deposit may be of any material, e.g. organic or inorganic, amorphous or crystalline, low-molecular or polymeric, ionic or nonionic, and the like. In general, the term "deposit" shall refer to any material adhering to the surface of the water bearing system which material was not present before the water bearing system has been used the first time.

Preferably, the composition according to the invention has a 5 day Biological Oxygen Demand (BOD 5) of at least 45%, more preferably at least 50%, still more preferably at least 55%, most preferably at least 60% and in particular at least 65%.

The Biological Oxygen Demand (BOD) is a test used to measure the concentration of biodegradable organic matter present in a sample of water. It can be used to infer the general quality of the water and its degree of pollution by biodegradable organic matter. It is used in water quality management and assessment, ecology and environmental science. BOD measures the rate of uptake of oxygen by micro-organisms in the sample of water at a fixed temperature (20°C) and over a given period of time (usually 5 days) in the dark. To ensure that all other conditions are equal, a very small amount of micro-organism seed is added to each sample being tested. This seed is typically generated by diluting activated sludge with de-ionised water. The test generally takes place over an elapsed period of 5 days. The BOD test is usually carried out by diluting the sample with de-ionised water saturated with oxygen, inoculating it with a fixed aliquot of seed, measuring the dissolved oxygen and sealing the sample (to prevent further oxygen dissolving in). The sample is kept at 20°C in the dark (to prevent photosynthesis and thereby the addition of oxygen) for five days and the dissolved oxygen is measured again. The difference between the final value and initial value is the BOD.

The apparent BOD for the control is subtracted from the control result to provide the corrected value. The loss of dissolved oxygen in the sample, once corrections have been made for the degree of dilution, is called the "5 day Biological Oxygen Demand" (= BOD 5). The BOD 5 may be expressed as percentage of the oxygen concentration after storage for 5 days in relation to the initial oxygen concentration.

BOD is similar in function to chemical oxygen demand (COD), in that both measure the amount of organic compounds in water. However, COD is less specific since it measures everything that can be chemically oxidised rather than just levels of biology active organic matter. BOD is used as a gauge of the effectiveness of wastewater treatment plants. Various commercial devices are available for its determination. For further details it can be referred e.g. to Clair N. Sawyer, Perry L. McCarty, Gene F. Parkin (2003). Chemistry for Environmental Engineering and Science, 5th edition, New York: McGraw-Hill; Lenore S. Clescerl, Arnold E. Greenberg, Andrew D. Eaton. Standard Methods for Examination of Water & Wastewater, 20th edition, Washington, DC: American Public Health Association; Stevens Institute of Technology.

Preferably, the composition according to the invention passes the test for "substantial biodegradability", i.e. may be regardes as "readily biodegardable", according to the BOD 5 measurement (i.e. the BOD5 is > 50%).

Preferably, the composition according to the invention has a 5 day Chemical Oxygen Demand (COD 5) of at least 45%, more preferably at least 50%, still more preferably at least 55%, most preferably at least 60% and in particular at least 65%.

The Chemical Oxygen Demand (COD) test is commonly used to indirectly measure the amount of organic compounds in water. Most applications of COD determine the amount of organic pollutants found in surface water (e.g. lakes and rivers), making COD a useful measure of water quality. It is expressed in milligrams per liter (mg/L), which indicates the mass of oxygen consumed per liter of solution. The International Organization for Standardization describes a standard method for measuring chemical oxygen demand in ISO 6060.

Preferably, the composition according to the invention is "primarily biodegradably", more preferably "ultimately biodegradable" according to EC Regulation No. 648/2004 on detergents (of 31 March 2004).

The reference method for laboratory testing of surfactant ultimate biodegradability is based on the EN ISO standard 14593: 1999 (CO₂ headspace test). Surfactants in detergents are considered as ultimately biodegradable if the level of biodegradability (mineralisation) measured according to specified tests is at least 60% within 28 days. Preferably, the compositions according to the invention exhibit a level of biodegradability is said specified tests of at least 65%, more preferably at least 70%, still more preferably at least 75%, most preferably at least 80% and in particular at least 85%. For further details concerning EC Regulation No. 648/2004 on detergents it can be referred e.g. to the Official Journal of the European Union, 8.4.2004, L 104/1-35.

Preferably, the composition according to the invention is "easily biodegradable" according to OECD-test 301 F (DIN EN ISO 9408).

The composition according to the invention contains a monocarboxylic acid and a multicarboxylic acid. The term "multicarboxylic acid" shall mean any compound bearing at least two carboxyl (or carboxylate) moieties.

Preferably, the monocarboxylic acid and/or the multicarboxylic acid are hydroxycarboxylic acids, i.e. comprise one or more hydroxy groups, preferably one hydroxy group.

Preferably, the monocarboxylic acid is aliphatic and/or comprises 2 to 6 carbon atoms, more preferably 2 to 4 carbon atoms and most preferably 3 carbon atoms. 2-hydroxy-propionic acid and 3-hydroxyproprionic acid are particularly preferred, especially (+)-2-hydroxypropionic acid (L-(+)-lactic acid).

Preferably, the multicarboxylic acid is a bicarboxylic acid or a tricarboxylic acid. Preferably, the multicarboxylic acid is aliphatic and/or comprises 4 to 10 carbon atoms, more preferably 5 to 8 carbon atoms, most preferably 6 carbon atoms. Citric acid is particularly preferred, especially its monohydrate. It has been surprisingly found that the cleaning capacity of citric acid monohydrate is superior over the cleaning capacity of citric acid anhydrate.

Preferably, the relative weight ratio of the multicarboxylic acid to the monocarboxylic acid is within the range of from 50:1 to 10:1, more preferably 45:1 to 12.5:1, most preferably 40:1 to 15:1. In a preferred embodiment of the composition according to the invention, the weight ratio of the multicarboxylic acid to the monocarboxylic acid is within the range of from 60:1 to 20:1, more preferably 55:1 to 25:1, still more preferably 50:1 to 30:1, most preferably 45:1 to 35:1 and in particular 42.5:1 to 37.5:1. In another preferred embodiment of the composition according to the invention, the weight ratio of the multicarboxylic acid to the monocarboxylic acid is within the range of from 30:1 to 1:1, more preferably 25:1 to 5:1, most preferably 20:1 to 10:1 and in particular 17.5:1 to 12.5:1.

Preferably, the relative weight ration of the monocarboxylic acid to ascorbic acid is within the range of from 10:1 to 1:10, more preferably 5:1 to 1:5, still more preferably most preferably 4:1 to 1:1 and in particular 2.5:1 to 1.5:1.

Preferably, the content of ascorbic acid is within the range of from 0.01 to 5.0 wt.-%, more preferably 0.05 to 4.0 wt.-% and most preferably 0.1 to 1.0 wt.-%, based on the total weight of the composition.

Preferably, the content of the monocarboxylic acid is within the range of from 0.01 to 10 wt.-%, more preferably 0.1 to 5.0 wt.-% and most preferably 0.5 to 2.5 wt.-%, based on the total weight of the composition.

Preferably, the content of the multicarboxylic acid is within the range of from 1.0 to 90 wt.-%, more preferably 5.0 to 60 wt.-% and most preferably 7.5 to 42.5 wt.-%, based on the total weight of the composition. In a preferred embodiment of the composition according to the invention, the content of the multicarboxylic acid is within the range of from 20 to 60 wt.-%, more preferably 25 to 55 wt.-%, still more preferably 30 to 50 wt.-%, most preferably 35 to 45 wt.-%, and in particular 37.5 to 42.5 wt.-%, based on the total weight of the composition. In another preferred embodiment of the composition according to the invention, the content of the multicarboxylic acid is within the range of from 1 to 30 wt.-%, more preferably 5 to 25 wt.%, still more preferably 7.5 to 22.5 wt.%, most preferably 10 to 20 wt.-%, and in particular 12,5 to 17.5 wt.-%, based on the total weight of the composition.

In a preferred embodiment of the invention, the composition comprises ascorbic acid, lactic acid as monocarboxylic acid and citric acid as multicarboxylic acid. Preferably, the composition comprises 0.01 to 5.0 wt.-%, more preferably 0.05 to 4.0 wt.-% and most preferably 0.1 to 1.0 wt.-% ascorbic acid, 0.01 to 10 wt.-%, more preferably 0.1 to 5.0 wt.-% and most preferably 0.5 to 2.5 wt.-% lactic acid and 1.0 to 90 wt.-%, more preferably 5.0 to 60 wt.-% and most preferably 7.5 to 42.5 wt.-% citric acid, based on the total weight of the composition.

The composition according to the invention may be solid, e.g., a powder, or liquid, e.g., a solution, suspension, emulsion or a gel.

Preferably, the composition according to the invention is aqueous. The water content of the composition is preferably within the range of from 20 to 90 wt.-%, more preferably 30 to 80 wt.-%, based on the total weight of the composition. In a preferred embodiment of the aqueous composition according to the invention, the pH value of the aqueous composition is below 4.5, more preferably at most 4.0, still more preferably at most 3.5, yet more preferably at most 3.0, most preferably at most 2.5 and most preferably at most 2.0. In a preferred embodiment, the pH value is within the range of 1.6±4, more preferably 1.6±3, still more preferably 1.6±2, and most preferably 1.8±1. In another preferred embodiment, the pH value is at most 1.0, more preferably at most 0.9, still more preferably at most 0.8, and most preferably at most 0.7. If the content of ascorbic acid, the monocarboxylic acid and the multicarboxylic acid as such is not sufficient in order to provide the desired pH value, further acids may be added, preferably inorganic mineral acids, such as hydrochloric acid, sulphuric acid and phosphoric acid, the latter being particularly preferred.

Preferably, the composition according to the invention further comprises a defoaming agent (foam control agent). Defoaming agents are known to the person skilled in the art. In this regard it can be referred to, e.g., Peter R. Garrett, Defoaming (Surfactant Science Series), CRC; 1 edition, 1992.

Preferably, the defoaming agent is selected from the group consisting of hydrocarbon-based mineral oils, organo-silicon-compounds, organosiloxanes, metal soaps, and mixtures of the foregoing (e.g., Drewplus^{®} 2100 EFG). Preferably, the defoaming agent is biodegadable and/or has a LD₅₀ value (rat, oral) of at least 100 mg/kg, more preferably at least 1000 mg/kg still more preferably at least 4000 mg/kg.

Preferably, the defoaming agent has a HLB value of 1 to 6, more preferably 1 to 5, most preferably 1 to 4 and in particular 1 to 3.

Preferably, the defoaming agent
- passes the test for "primary biodegradability" according to EC Regulation No. 648/2004; and/or
- passes the test for "ultimate biodegradability" according to EC Regulation No. 648/2004; and/or
- is easily biodegradable according to OECD-test 301 F.

Preferably, the content of the defoaming agent is within the range of from 0.01 to 5.0 wt.-%, more preferably 0.05 to 1.0 wt.-% and most preferably 0.1 to 0.5 wt.-%, based on the total weight of the composition.

Preferably, the composition according to the invention further comprises an alkoxylated, preferably ethoxylated alcohol or an ester of an alkoxylated, preferably ethoxylated alcohol. Preferably, the ester of the ethoxylated alcohol is a compound according to general formula (I), 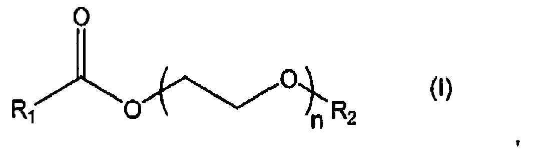 wherein
R₁ is C₁-C₆-alkyl, preferably C₁-C₃-alkyl;
R₂ is C₁-C₆-alkyl, preferably C₂-C₆-alkyl; and
n is an integer of 1 to 10, preferably 1, 2, 3, 4 or 5.

2-(2-Butoxyethoxy)ethyl acetate is particularly preferred.

Preferably, the ethoxylated alcohol is a compound according to general formula (II), 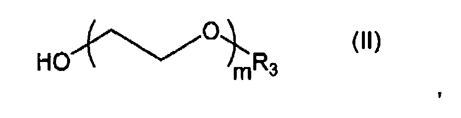 wherein
R₃ is C₁-C₁₈-alkyl, preferably C₅-C₁₆-alkyl, more preferably C₉-C₁₁-alkyl; and
m is an integer of 1 to 20, preferably 2, 3, 4, 5, 6, 7 or 8 (e.g., Sol Cleaner^{®} 300).

Preferably, the ethoxylated alcohol is biodegadable and/or has a LD₅₀ value (rat, oral) of at least 100 mg/kg, more preferably at least 200 mg/kg still more preferably at least 1000 mg/kg.

Preferably, the ethoxylated alcohol
- passes the test for "primary biodegradability" according to EC Regulation No. 648/2004; and/or
- passes the test for "ultimate biodegradability" according to EC Regulation No. 648/2004; and/or
- is easily biodegradable according to OECD-test 301 F.

Preferably, the content of the ethoxylated alcohol is within the range of from 0.1 to 30 wt.-%, more preferably 0.5 to 20 wt.-% and most preferably 0.5 to 12.5 wt.-%, based on the total weight of the composition.

Preferably, the composition according to the invention further comprises a corrosion inhibitor. Corrosion inhibitors are known to the person skilled in the art. In this regard it can be referred to, e.g., Vedula S. Sastri, Corrosion Inhibitors: Principles and Applications, Wiley, 1998 and Michael and Irene Ash, Handbook of Corrosion Inhibitors (Synapse Chemical Library), Synapse Information Resources, Inc. 2000.

Preferably, the corrosion inhibitor is selected from the group consisting of alkali metal borates, alkali metal molybdates, hydrocarbyl triazoles, silicates, morpholine, ethylenediamine, pyridine, pyrrolidine and acetylene derivatives. Preferably, the corrosion inhibitor is biodegadable and/or has a LD₅₀ value (rat, oral) of at least 1.0 mg/kg, more preferably at least 5.0 mg/kg.

Preferably, the corrosion inhibitor
- passes the test for "primary biodegradability" according to EC Regulation No. 648/2004; and/or
- passes the test for "ultimate biodegradability" according to EC Regulation No. 648/2004; and/or
- is easily biodegradable according to OECD-test 301 F.

In a preferred embodiment the corrosion inhibitor comprises a compound having a C-C-triple bond (alkyne derivative). Preferably, the compound is an alkoxylated prop-2-yn-1-ol, more preferably a propoxylated prop-2-yn-1-ol (e.g., Korantin^{®} PP).

Preferably, the content of the corrosion inhibitor is within the range of from 0.01 to 5.0 wt.-%, more preferably 0.05 to 1.0 wt.-% and most preferably 0.1 to 0.5 wt.-%, based on the total weight of the composition.

Preferably, the composition according to the invention further comprises one or more surfactants. The surfactant may be non-ionic, anionic or cationic.

In a preferred embodiment, the surfactant is an amine-oxide (N-oxide). Preferably, the surfactant is a compound according to general formula (III) 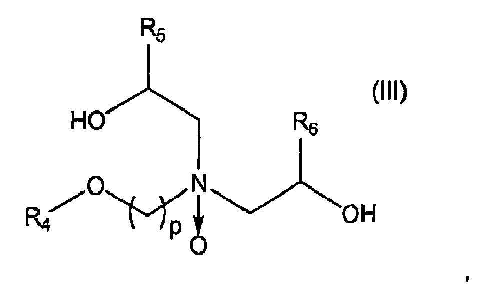 wherein
R₄ is C₁-C₁₈-alkyl, preferably C₁-C₆-alkyl;
R₅ and R₆ are independently H or C₁-C₁₈-alkyl, preferably H or C₁-C₆-alkyl; and
p is an integer of 1 to 10, preferably 2, 3, 4 or 5, more preferably 3 (e.g., Tomah^{®} AO-455).

Further preferred surfactants are salts, preferably sodium salts, of alkylaminocarboxylates, such as N-(2-carboxyethyl)-N-(2-ethythexyl)-β-alanine monosodium salt (e.g., Amphotensid^{®} EH).

Preferably, the surfactant is biodegradable and/or has a daphnia toxicity of at least 300 mg/l, more preferably at least 450 mg/l (OECD 202, EC₅₀ after 48 hours), and/or has a LD₅₀ value (rainbow trout) of at least 80 mg/kg, more preferably at least 100 mg/kg.

Preferably, the surfactant has a HLB value of 5 to 20, more preferably 6 to 19, still more preferably 7 to 18, most preferably 8 to 17 and in particular 9 to 16.

Preferably, the surfactant
- passes the test for "primary biodegradability" according to EC Regulation No. 648/2004; and/or
- passes the test for "ultimate biodegradability" according to EC Regulation No. 648/2004; and/or
- is easily biodegradable according to OECD-test 301 F.

Preferably, the content of the surfactant is within the range of from 0.01 to 20 wt.-%, more preferably 0.05 to 15 wt.-% and most preferably 0.1 to 5.0 wt.-%, based on the total weight of the composition.

Further preferred embodiments 1-5 of the composition according to the invention are summarized in the table here below:

| component [wt.-%] | 1 | 2 | 3 | 4 | 5 |
|---|---|---|---|---|---|
| water | 40-80 | 45-75 | 55-60 | 45-55 | 65-75 |
| ascorbic acid | 0.1-2.5 | 0.1-1.0 | 0.1-1.0 | 0.1-1.0 | 0.1-1.0 |
| L-(+)-lactic acid | 0.1-5.0 | 0.5-2.0 | 0.5-2.0 | 0.5-2.0 | 0.5-2.0 |
| citric acid or its monohydrate | 5-50 | 10-45 | 35-45 | 35-45 | 10-20 |
| defoaming agent | 0.01-1.0 | 0.1-0.5 | 0.1-0.5 | 0.1-0.5 | 0.1-0.5 |
| anticorrosion agent | 0.01-1.0 | 0.1-0.5 | 0.1-0.5 | 0.1-0.5 | 0.1-0.5 |
| surfactant (alkoxylated alcohol) | 0.1-20 | 0.5-15 | 0.1-2.0 | 0.1-2.0 | 5.0-15.0 |
| phosphoric acid | 0-10 | 0-10 | - | 5.0-10 | - |
| surfactant (amine oxide) | 0-5.0 | 0-5.0 | - | - | 1.0-3.0 |
| surfactant (alkylaminocarboxylate) | - | - | - | - | 1.0-3.0 |

Preferably, the composition comprises substantially no proteins, particularly substantially no whey proteins.

According to the invention, the composition described above is used for removing and/or preventing deposits from surfaces of water-bearing systems, preferably of machines or parts of machines, preferably for processing cellulosic material.

Preferably, the machines or parts of machines are for the manufacture of pulp, paper, paper board, or cardboard. In a preferred embodiment, the water-bearing system is a component of a papermaking plant that is used to accommodate and transfer aqueous fiber suspensions for paper manufacture.

Preferably, the water-bearing system is a circuit system.

When using the composition according to the invention, it may be employed continuously or by an interval dosage.

Preferably, the surface is of a component selected from the group consisting of screens, drying screens, felts, filters, membranes, tanks, vessels, towers, pipes, tubes, valves, seals, gaskets, showers, channels, headboxes, frames, scaffolds, pumps, refiners, pulpers, flotation units, rollers, cylinders and wires.

The compositions to be used according to the present invention are most surprisingly suitable as cleaners or agents having an impregnating action against impurities, such as adhesives, resins, waxes, fats, and/or a bitumen-repellent action at any site of pulp, paper, and cardboard-making machines.

The compositions may be used according to the invention on the surface of the units, in particular under treatment of the units in the wet section of the machines and/or of the units in the drying section.

The compositions may be used according to the invention while the machine is running (online) or while the machine is stopped (offline). When the machine is stopped, it is preferred that the residence time of the composition on the surfaces is several seconds to several minutes. The composition may be used in the return movement of the wire, and the wire is optionally inflated with air prior to its contact with the paper web.

The compositions may be used according to the present invention as such or after dilution with water and/or solvents, preferably water. In general, water having temperatures in the range of 5°C-80°C, preferably 20°C-50°C, is used for this purpose. Preferably, the composition is used in aqueous dilution in a concentration of 0.001-50 wt.-%, more preferably 0.1-20 wt.-%.

The dilute composition may be applied in desired manner, preferably via a spray pipe provided with flat-jet nozzles having an overlapping spray region. In case of wirecleaning plants, the emulsion may be added to the wash water.

Owing to the action of the agents to be used according to the present invention tacky impurities lose their adhesiveness and are released from the surface of the units, either automatically or when sprayed with water, and are removed.

In a further preferred embodiment of the invention, the water-bearing system is selected from the group consisting of waste water effluents; membrane purification systems; reverse osmosis filtration units; ultrafiltration units; sand filters; steam generating systems; boilers; heat exchangers; evaporative condensers; cooling towers; cooling water systems; closed cooling systems; air washers; devices for heating, ventilating and air conditioning (HVAC); pasteurizers; sterilizers; engines; biodiesel plants; oil separators; medical devices; and devices for processing food.

The water bearing system as such may be selected from the group specified above, or the water-bearing system may be a component of an apparatus, device, unit or system specified above.

In a preferred embodiment the composition according to the invention is used for removing and/or preventing deposits from surfaces of membranes. In a preferred embodiment, the membranes are for reversed osmosis, e.g. in kitchens, hospitals, refineries, power plants, food production, semiconductor manufacturing facilities, pharmaceutical manufacturing facilities, manned spacecraft, sailboats, etc. The membranes may also be used in electrodialysis. In another preferred embodiment, the membranes are for membrane bioreactors.

Reversed osmosis is increasingly the technology of choice for many waste water treatment applications. Reversed osmosis is used to create drinking water from well and seawater. It is used to make high purity water for specialized industrial processes such as pharmaceutical and semiconductor manufacturing. Over the past years, reversed osmosis has also increased its market share in the pretreatment of boiler feedwater. Preferred applications include the treatment of circulating cooling water in power stations in order to reduce water consumption and discharge of contaminated waste water, the treatment of pulp and paper effluents for water recovery and chemical reclamation, the treatment of drainage water from coal mines to achieve zero discharge water and produce drinking water and chemical byproducts, the treatment of uranium conversion effluent to facilitate recovery of uranium and yield satisfactorily safe wastewater, the desalination of agricultural drainage to reduce downstream salinity or river, and the desalination of effluent from biologically treated municipal wastewater prior to recharging into the ground.

Examples of suitable membranes are manufactured from, e.g., cellulose acetate, polyamide, and the like. Hollow fine fiber (HFF) membranes and spiral wound (SP) membranes are preferred. The systems may also be coated onto a polysulphone support sheet (thin film composite).

During operation of membranes in water bearing systems, such as in reversed osmosis, deposits form on the surfaces of the membranes. Amount and type of deposits very much depend upon the particular application.

Over time, membrane systems can become fouled with a wide range of materials such as colloids, organic matter and biological organisms. Fouling occurs because material in the feedwater that cannot pass through the membrane is forced onto the membrane surface by the flow of the water going through the membrane. If the "cross" flow (water that does not pass through the membrane) is not sufficient (is not turbulent), or if it is prevented from reaching the membrane (by deposits or a mesh spacer), the material from the feedwater is deposited on the membrane surface.

Fouling increases with increasing flux rate (the flow of water through the membrane) and with decreasing feed flow (velocity). If left uncorrected, the accumulation of these foulants can cause a severe loss of performance in the system: pressure requirements increase to maintain flow, pressure drops increase, and salt rejection can suffer. If the system is not cleaned and continues to build up foulants, the elements may "telescope", or shear internally; causing the integrity of the membrane surface to be compromised and rendering the membrane irreversibly damaged. Fouling tends to occur in membranes at the feed end of the system, where the flux rate is the highest.

Biological fouling can also occur due to the growth of algae or other biological contaminants in the membrane element. Although this type of fouling is caused by contamination rather than flow problems, the resulting blockade of the membrane is the same. The first effect of biofouling on membrane operation is a substantial increase in the electrical costs to operate the unit. If biofouling remains out of control, it can contribute to other combinations of fouling and eventually is responsible for premature membrane replacement.

Scaling of the membrane surface occurs due to the precipitation of sparingly soluble salts. As water passes through the membrane, dissolved minerals from the feedwater become concentrated in the reject stream, If the concentration of the minerals in the reject stream exceeds their solubility products, crystals will precipitate onto the membrane. Scaling occurs first in the last elements of a reversed osmosis system because the feedwater is more concentrated near the end of the process. Typical types of scale that may occur on the reversed osmosis system membranes include calcium and magnesium carbonates, calcium and magnesium sulfates, metal oxides, silica as well as strontium and barium sulfates.

It has been surprisingly found that the composition according to the invention may be advantageously used to remove and/or prevent deposits from surfaces of membranes in water-bearing systems, preferably of membranes for reversed osmosis or for membrane bioreactors. The tendency of fouling and scaling can be controlled, whereas hazardous cleansing agents, such as sulfuric acid, may be avoided. Operation efficiency is maintained at high recovery rates.

Cleaning of the membrane can be made in place whereby the piping is provided to allow for recirculation of the composition according to the invention, preferably after dilution. In this fashion, valves are manipulated to allow for recirculation of the composition through the membrane until the membrane is cleaned to the point where it can be returned into a reverse osmosis system. In some commercially operating systems, a membrane cartridge is removed and placed in a cleaner mode where the composition is recirculated through the membrane in the cartridge until the membrane is sufficiently clean for reuse. In either case, the composition is prepared which is capable of removing scale and other foulants from the membrane.

The composition according to the invention is preferably used for reducing the number of cleaning cycles of membranes.

The composition according to the invention may also be used
- for removing and/or preventing deposits from surfaces of membranes of bioreactors,
- for improving the performance of membrane bioreactors, or
- for reducing the number of cleaning cycles of membrane bioreactors.

Membrane bioreactor systems may combine ultra filtration technology with biological treatment for municipal, commercial and industrial wastewater treatment and water reuse applications. The membrane bioreactor (MBR) process is an emerging advanced wastewater treatment technology that has been successfully applied at an ever increasing number of locations around the world. Membrane bioreactor systems preferably incorporate reinforced hollow fiber membranes specifically designed to meet the requirements of wastewater treatment. For details it may be referred to e.g. S. Judd, The MBR Book: Principles and Applications of Membrane Bioreactors for Water and Wastewater Treatment, Elsevier Science, 2006.

In another preferred embodiment the composition according to the invention is used for removing and/or preventing deposits from surfaces of sand filters in water-bearing systems. Sand filters may be used for water purification. There are three main types: rapid (gravity) sand filters, upflow sand filters and slow sand filters. All three methods are used extensively in the water industry throughout the world. The first two usually require the use of flocculant chemicals to work effectively whilst slow sand filters can produce very high quality water free from pathogens, taste and odour without the need for chemical aids. Passing flocculated water through a rapid gravity sand filter strains out the floc and the particles trapped within it reducing numbers of bacteria and removing most of the solids. The medium of the filter is sand of varying grades. Where taste and odour may be a problem (organoleptic impacts), the sand filter may include a layer of activated carbon to remove such taste and odour.

Sand filters are occasionally used in the treatment of sewage as a final polishing stage. In these filters the sand traps residual suspended material and bacteria and provides a physical matrix for bacterial decomposition of nitrogenous material, including ammonia and nitrates, into nitrogen gas.

Sand filters become clogged with floc after a period in use and they are then backwashed or pressure washed to remove the floc. This backwash water is run into settling tanks so that the floc can settle out and it is then disposed of as waste material. The supernatant water is then run back into the treatment process or disposed off as a waste-water stream. In some countries the sludge may be used as a soil conditioner. Inadequate filter maintenance has been the cause of occasional drinking water contamination. For further details it can be referred to e.g. D. Purchas, Handbook of Filter Media, Elsevier Science; 1st Ed edition, 1996 and I.M. Marshall Hutten, Handbook of Nonwoven Filter Media, Elsevier Science, 2007.

It has been surprisingly found that the composition according to the invention may be advantageously used for removing and/or preventing deposits from the surface of sand in sand filters, preferably during backwashing.

In yet another preferred embodiment the composition according to the invention is used for removing and/or preventing deposits from surfaces of heat exchangers.

A heat exchanger is a device built for efficient heat transfer from one fluid to another, whether the fluids are separated by a solid wall so that they never mix, or the fluids are directly contacted. Heat exchangers are widely used in petroleum refineries, chemical plants, petrochemical plants, natural gas processing, refrigeration, power plants, air conditioning and space heating. Typical heat exchangers are shell and tube heat exchangers, plate heat exchangers, regenerative heat exchangers, adiabatic wheel heat exchangers, fluid heat exchangers, dynamic scraped surface heat exchangers, phase-change heat exchangers and HVAC air coils.

According to the invention, phase-change heat exchangers are preferred. In addition to heating up or cooling down fluids in just a single phase, phase-change heat exchangers can be used either to heat a liquid to evaporate (or boil) it or used as condensers to cool a vapor to condense it back to a liquid. In chemical plants and refineries, reboilers used to heat incoming feed for distillation towers are often phase-change heat exchangers. Distillation set-ups typically use condensers to condense distillate vapors back into liquid. Power plants which have steam-driven turbines commonly use phase-change heat exchangers to boil water into steam. Phase-change heat exchangers or similar units for producing steam from water are often called boilers. In the nuclear power plants called pressurized water reactors, special large phase-change heat exchangers which pass heat from the primary (reactor plant) system to the secondary (steam plant) system, producing steam from water in the process, are called "steam generators". All power plants, fossil-fueled and nuclear, using large quantities of steam have large condensers to recycle the water back to liquid form for re-use. In order to conserve energy and cooling capacity in chemical and other plants, regenerative phase-change heat exchangers can be used to transfer heat from one stream that needs to be cooled to another stream that needs to be heated, such as distillate cooling and reboiler feed pre-heating. The term "phase-change heat exchanger" can also refer to heat exchangers that contain a material within their structure that has a change of phase. This is usually a solid to liquid phase due to the small volume difference between these states. This change of phase effectively acts as a buffer because it occurs at a constant temperature but still allows the heat exchanger to accept additional heat. One example where this has been investigated is for use in high power aircraft electronics.

Preferably, the phase-change heat exchanger is a condenser selected from the group consisting of evaporative cooling systems, evaporative condensers, water-cooled condensers, dry coolers, evaporative coolers, cooling towers, and evaporative industrial fluid coolers. Such heat-exchangers are known to the skilled artisan. For further details it can be referred to e.g. S. Kakac et al., Heat Exchangers: Selection, Rating and Thermal Design, CRC; 2 edition, 2002; R.K. Shah, Fundamentals of Heat Exchanger Design, Wiley; 1 edition, 2002; J.E. Brumbaugh, Audel HVAC Fundamentals, Air Conditioning, Heat Pumps and Distribution Systems, Audel; 4 Sub edition, 2004; and S. Kakac, Boilers, Evaporators, and Condensers, Wiley-Interscience; 1 edition, 1991.

Preferably, a cooling tower is a device whose main purpose is to cool a fluid, usually water, by direct contact between that fluid and a stream of gas, usually air. Preferably, an evaporative condenser is a device whose main purpose is to cool a fluid by passing that fluid through a heat exchanger which is itself cooled by contact with another fluid, usually water, passing through a stream of air.

It has been surprisingly found that the composition according to the invention may be advantageously used for removing and/or preventing deposits from the surface of heat exchangers, preferably phase-change heat exchangers, more preferably condensers, most preferably evaporative condensers.

In yet another preferred embodiment the composition according to the invention is used for removing and/or preventing deposits from surfaces of steam generating systems or boilers. It has been surprisingly found that the composition according to the invention may be advantageously used for removing and/or preventing deposits from the surface of steam generating systems or boilers.

Still another aspect of the invention relates to the use of the composition according to the invention, as described above, for removing and/or preventing deposits from surfaces of rail wagons or vehicle parts. The composition according to the invention may be applied by spraying or rolling. The contact time depends upon the degree of contamination and/or oxidation. Moderate contamination/oxidation usually requires contact times of about 5 to about 30 minutes, heavy contamination/oxidation about 30 to about 90 minutes. Afterwards, the rail wagon is preferably hosed down with water at increased pressure, preferably with hot water (e.g. 60°C), and the vehicle parts are preferably rinsed with clean water, respectively.

Yet another aspect of the invention relates to the composition as described above, i.e. to the composition as such. The composition according to the invention comprises
(i) ascorbic acid;
(ii) a monocarboxylic acid, preferably a hydroxymonocarboxylic acid, more preferably lactic acid, most preferably L-(+) lactic acid; and
(iii) a multicarboxylic acid, preferably a hydroxymulticarboxylic acid, more preferably citric acid, most preferably citric acid monohydrate;
(iv) optionally a defoaming agent;
(v) optionally a corrosion inhibitor;
(vi) optionally a surfactant, preferably a non-ionic, cationic or anionic surfactant; and
(vii) optionally an ethoxylated alcohol or an ester of an ethoxylated alcohol.

Preferred embodiments of the composition according to the invention become apparent from the above description of the other aspects of the invention.

A still further aspect of the invention relates to a method for removing and/or preventing deposits from surfaces of water-bearing systems, preferably of machines or parts of machines, preferably for processing cellulosic material, comprising the step of treating a surface, preferably a surface of a machine or a part of a machine, with the composition according to the invention.

The skilled person is fully aware of the meaning of the term "treating". For the purpose of the specification, the term "treating" shall include contacting, adding, spraying, pouring, bathing, dipping, coating, and the like. Treating may also include mechanical action, such as rubbing, brushing, wire brushing, shot blasting, and the like. The duration of the treatment depends on the individual circumstances, Depending on the kind of deposit, exposure times may vary from a few seconds to several minutes or even hours. Suitable conditions may be revealed by routine experimentation.

Preferred embodiments of the method according to the invention become apparent from the description of the other aspects of the invention supra.

### EXAMPLES

The following examples further illustrate the invention but are not to be considered as limiting its scope.

The following compositions were prepared:

| | 1 | 2 | 3 |
|---|---|---|---|
| tap water | 57.08 | 49.08 | 70.08 |
| Drewplus^{®} 2100 EFG, Ashland Ned. B.V., Barendrecht (NL) | 0.20 | 0.20 | 0.20 |
| Sol cleaner 300, Solaster Production AB, Svanesund (SE) | 1.00 | 1.00 | 10.00 |
| Tomah^{®} AO-455, Tomah Products, Inc., Milton Wisconsin (US) | - | - | 1.00 |
| Korantin^{®} PP, BASF, Ludwigshafen (DE) | 0.20 | 0.20 | 0.20 |
| Citric acid monohydrate | 40.00 | 40.00 | 15.00 |
| Ascorbic acid | 0.50 | 0.50 | 0.50 |
| L-(+)-lactic acid | 1.02 | 1.02 | 1.02 |
| Phosphoric acid | - | 8.00 | - |
| Amphotensid^{®} EH, Zschimmer & Schwarz, Lahnstein (DE) | - | - | 2.00 |

The cleaning efficacy of the composition of example 3 was further investigated.

Drying screens that had been used in a paper plant were cut into pieces of 5x10 cm and dried in an oven for 30 min at 75°C. Thereafter, the drying sieves were dipped into aqueous solutions of the composition of example 3 in different concentrations: 1%, 3%, 5% and 10%. By means of a magnetic stirrer, the probes were stirred for 30 min at 60°C. Finally, the sieves were washed for 30 seconds with distilled water at a pressure of 1 bar and then dried in an oven at 75°C.

The results are summarized in Figure 1 (- = comparison prior to treatment). The percentages indicate the concentrations of the composition that was used.

The 5 day biological oxygen demand (BOD 5) of compositions 1 to 3 was measured. The results are summarized in the table here below:

| | oxygen (g/l) | | |
|---|---|---|---|
| | initial | after 5 days | BOD 5 |
| 1 | 266.3 | 190 | 71.3% |
| 2 | 263.9 | 190 | 72.0% |
| 3 | 382.5 | 250 | 65.4% |

Compositions 1 to 3 exhibit excellent biodegradability.

## Claims

1. Use of a composition comprising (i) ascorbic acid, (ii) a monocarboxylic acid and (iii) a multicarboxylic acid for removing and/or preventing deposits from surfaces of water-bearing systems.

2. The use according to claim 2, wherein the composition
- has a 5 day Biological Oxygen Demand (BOD 5) of at least 45%, and/or
- has a 5 day Chemical Oxygen Demand (COD 5) of at least 45%, and/or
- is "ultimately biodegradable" according to EC Regulation No. 648/2004.

3. The use according to claim 1 or 2, wherein the monocarboxylic acid and the multicarboxylic acid are hydroxycarboxylic acids.

4. The use according to any of the preceding claims, wherein the monocarboxylic acid comprises 2 to 6 carbon atoms.

5. The use according to any of the preceding claims, wherein the multicarboxylic acid is a bicarboxylic acid or a tricarboxylic acid comprising 4 to 10 carbon atoms.

6. The use according to any of the preceding claims, wherein the monocarboxylic acid is lactic acid.

7. The use according to claim 6, wherein the lactic acid is L-(+)-lactic acid.

8. The use according to any of the preceding claims, wherein the multicarboxylic acid is citric acid.

9. The use according to claim 8, wherein the citric acid is citric acid monohydrate.

10. The use according to any of the preceding claims, wherein the relative weight ratio of the multicarboxylic acid to the monocarboxylic acid is within the range of from 50:1 to 10:1.

11. The use according to any of the preceding claims, wherein the content of ascorbic acid is within the range of from 0.1 to 1.0 wt.-%, based on the total weight of the composition.

12. The use according to any of the preceding claims, wherein the content of the monocarboxylic acid is within the range of from 0.5 to 2.5 wt.-%, based on the total weight of the composition.

13. The use according to any of the preceding claims, wherein the content of the multicarboxylic acid is within the range of from 5.0 to 60 wt.-%, based on the total weight of the composition.

14. The use according to any of the preceding claims, wherein the composition is aqueous.

15. The use according to claim 14, wherein the water content of the composition is within the range of from 30 to 80 wt.-%, based on the total weight of the composition.

16. The use according to claim 14 or 15, wherein the pH value of the aqueous composition is below 4.5.

17. The use according to any of the preceding claims, wherein the composition further comprises a defoaming agent.

18. The use according to claim 17, wherein the defoaming agent is selected from the group consisting of hydrocarbon-based mineral oils, organo-silicon-compounds, organosiloxanes, metal soaps, and mixtures of the foregoing.

19. The use according to any of the preceding claims, wherein the composition further comprises a corrosion inhibitor.

20. The use according to claim 19, wherein the corrosion inhibitor is selected from the group consisting of alkali metal borates, alkali metal molybdates, hydrocarbyl triazoles, silicates, morpholine, ethylenediamine, pyridine, pyrrolidine and acetylene derivatives.

21. The use according to any of the preceding claims, wherein the composition further comprises one or more surfactants.

22. The use according to claim 21, wherein the surfactant is non-inoc, cationic or anionic.

23. The use according to any of the preceding claims, wherein the composition further comprises an ethoxylated alcohol or an ester of an ethoxylated alcohol.

24. The use according to claim 23, wherein the ester of the ethoxylated alcohol is a compound according to general formula (I), 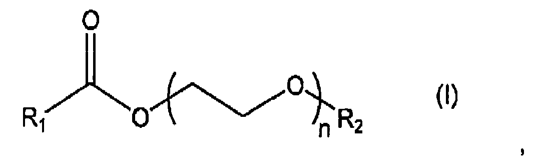 wherein
R₁ is C₁-C₆alkyl;
R₂ is C₁-C₆-alkyl; and
n is an integer of 1 to 10.

25. The use according to any of the preceding claims, wherein the composition is employed continuously or by an interval dosage.

26. The use according to any of the preceding claims, wherein the composition is employed in aqueous dilution in a concentration of 0.1-20%-wt.

27. The use according to any of the preceding claims, wherein the water-bearing system is a circuit system.

28. The use according to any of the preceding claims, wherein the surface is of a component selected from the group consisting of screens, drying screens, felts, filters, membranes, tanks, vessels, towers, pipes, tubes, valves, seals, gaskets, showers, channels, headboxes, frames, scaffolds, pumps, refiners, pulpers, flotation units, rollers, cylinders and wires.

29. The use according to any of the preceding claims, wherein the water-bearing system is of a machine or a part of a machine.

30. The use according to claim 29, wherein the machine or part of a machine is for processing cellulosic material.

31. The use according to claim 29 or 30, wherein the composition is employed while the machine is running or stopped.

32. The use according to any of claims 29 to 31, wherein the machines or parts of machines are for the manufacture of pulp, paper, paper board, or cardboard.

33. The use according to any of the preceding claims, wherein the water-bearing system is a component of a papermaking plant that is used to accommodate and transfer aqueous fiber suspensions for paper manufacture.

34. The use according to any of claims 1 to 28, wherein the water-bearing system is selected from the group consisting of waste water effluents; membrane purification systems; reverse osmosis filtration units; ultrafiltration units; sand filters; steam generating systems; boilers; heat exchangers; evaporative condensers; cooling towers; cooling water systems; closed cooling systems; air washers; devices for heating, ventilating and air conditioning (HVAC); pasteurizers; sterilizers; engines; biodiesel plants; oil separators; medical devices; and devices for processing food.

35. A composition as defined in any of claims 14 to 24.

36. A method for removing and/or preventing deposits from surfaces of water-bearing systems comprising the step of treating the surfaces with a composition as defined in any of claims 1 to 24.
